# EUROPÄISCHE PATENTSCHRIFT

(11) **EP 4 370 737 B1**
(45) Veröffentlichungstag und Bekanntmachung des Hinweises auf die Patenterteilung: **16.04.2025**
(21) Anmeldenummer: 22764305.3
(22) Anmeldetag: 11.07.2022
(51) Int. Cl.: D02G 3/48, B60C 9/00

(54) **DUPLEXKORD ZUR VERWENDUNG ALS FESTIGKEITSTRÄGER IN EINER GÜRTELBANDAGE EINES FAHRZEUGLUFTREIFENS**
DUPLEX CORD FOR USE AS A REINFORCEMENT IN A BELT BANDAGE OF A PNEUMATIC VEHICLE TYRE
CÂBLÉ DUPLEX S'UTILISANT COMME SUPPORT DE RÉSISTANCE DANS UN BANDAGE DE CEINTURE D'UN PNEUMATIQUE DE VÉHICULE

(30) Priorität: 15.07.2021 DE 102021207531
(43) Veröffentlichungstag der Anmeldung: 22.05.2024
(73) Patentinhaber: Continental Reifen Deutschland GmbH, 30175 Hannover (DE)
(72) Erfinder: GROTE, Claudia, 30175 Hannover (DE); KRAMER, Thomas, 30175 Hannover (DE); REESE, Wolfgang, 30175 Hannover (DE)
(74) Vertreter: Continental Corporation
(86) Internationale Anmeldenummer: PCT/DE2022/200153
(87) Internationale Veröffentlichungsnummer: WO 2023/284924

(56) Entgegenhaltungen:
- EP-A1- 3 031 623
- EP-A1- 3 441 237

## Beschreibung

Die Erfindung betrifft einen Duplexkord zur Verwendung als Festigkeitsträger in einer Gürtelbandage eines Fahrzeugluftreifens, ein Verbundmaterial umfassend entsprechende Duplexkorde, ein daraus herstellbares vulkanisiertes Verbundmaterial, einen entsprechenden Fahrzeugreifen aus diesen Materialien sowie die Verwendung entsprechender Duplexkorde in der Gürtelbandage eines Fahrzeugluftreifens zur Verbesserung der Hochgeschwindigkeitseigenschaften und der Rollwiderstandseigenschaften.

Der Gegenstand der Erfindung ist in den beigefügten Ansprüchen definiert.

Die Entwicklung und Fertigung von leistungsfähigen Fahrzeugreifen ist ein Gebiet, bei dem ein stetiges Bedürfnis danach besteht, die aus dem Stand der Technik bekannten Komponenten weiter zu verbessern. Eine Reifenkomponente, der bei der Optimierung der Hochgeschwindigkeitseigenschaften von Fahrzeugreifen eine besondere Bedeutung zukommt, sind die sogenannten Verstärkungskorde, die in der Gürtelbandage eines Fahrzeugluftreifens als Festigkeitsträger eingesetzt werden. Diese Verstärkungskorde dienen unter anderem dazu, die notwendige Steifigkeit im Reifen sicherzustellen und beeinflussen mit ihren mechanischen Eigenschaften maßgeblich die späteren Laufeigenschaften des Reifens, insbesondere durch das Hysterese-Verhalten und den sich für die Verstärkungskorde ergebenden Verlauf im Kraft-Dehnungs-Diagramm.

Im Stand der Technik werden derzeit für besonders leistungsfähige Fahrzeugluftreifen, welche insbesondere hinsichtlich der Hochgeschwindigkeitsleistung optimiert sind, hochmodulige Triplexkorde eingesetzt, in denen zwei Aramidgarne mit relativ hohem Modulus und ein niedermoduliges Nylongarn miteinander verdreht sind. Die helikale Verdrehung ermöglicht dabei eine Verlängerung des Aramids bei relativ niedrigen Kräften, was notwendig ist, um im Fertigungsprozess der Fahrzeugreifen, insbesondere beim Eingeben in die Form, keine ungewünschte Deformation zu verursachen.

Auch wenn die etablierten Triplexkorde die Fertigung von Fahrzeugluftreifen mit vorteilhaften Leistungseigenschaften ermöglichen, werden diese Triplexkorde regelmäßig auch als nachteilig empfunden. Die Herstellung aus drei einzelnen Garnen erfordert einen vergleichsweise komplexen und kostenintensiven zweistufigen Verdrehungsprozess, bei dem das eher spröde Aramid insgesamt zweimal mechanischem Stress ausgesetzt wird, was grundsätzlich eher vermieden werden sollte. Zudem weisen Triplexkorde regelmäßig eine vergleichsweise hohe Dicke auf, was im späteren Betrieb des Fahrzeugreifens hinsichtlich der Temperaturentwicklung und damit schlussendlich auch der Hochgeschwindigkeitsleistungsfähigkeit als nachteilig empfunden wird. Zudem verschlechtert das Hysterese-Verhalten solcher Triplexkorde in einigen Fällen den Rollwiderstand der entsprechenden Fahrzeugreifen.

Aus dem Stand der Technik sind als Alternative zu Triplexkorden auch sogenannte Duplexkorde bekannt, in denen lediglich zwei Garne miteinander verdreht sind und welche daher deutlich einfacher herzustellen sind. Duplexkorde sind dabei zudem regelmäßig dünner als Triplexkorde. Der Nachteil von Duplexkorden, der ihren Einsatz in Hochleistungsreifen für Hochgeschwindigkeitsanwendungen in vielen Fällen limitiert, ist, dass das Kraft-Dehnungs-Verhalten gegenüber Triplexkorden regelmäßig als nachteilig empfunden wird, wobei insbesondere nicht der notwendige hohe Modul des gesamten Kords erreicht wird.

Duplexkorde und Triplexkorde sind aus dem Stand der Technik grundsätzlich bekannt.

Aus der EP 3 031 623 A1 ist ein Hybridkord zur Verwendung als Festigkeitsträger in einer Gürtelbandage eines Fahrzeugluftreifens bekannt. Der Hybridkord besteht aus einem hochmoduligen Garn mit einer Feinheit von mindestens 1100 dtex und einem niedermoduligen Garn mit einer Feinheit von höchstens 550 dtex, wobei die Garne miteinander endverdreht sind. Das niedermodulige Garn weist ferner eine auf seine Feinheit normierte, gemäß ASTM D885 ermittelte Kraft auf, welche bei einer Dehnung von 1% kleiner als 150 mN/tex und bei einer Dehnung von 2% kleiner als 200 mN/tex ist. Das hochmodulige Garn weist ferner eine auf seine Feinheit normierte, gemäß ASTM D885 ermittelte Kraft auf, welche bei einer Dehnung von 1% größer als 300 mN/tex und bei einer Dehnung von 2% größer als 500 mN/tex ist. Der Hybridkord soll kostengünstig herstellbar sein, einen problemlosen Reifenaufbau ermöglichen sowie beim Einsatz in einer Gürtelbandage zu einer verbesserten Hochgeschwindigkeitstauglichkeit des Reifens beitragen.

Die EP 3 441 237 A1 offenbart einen weiteren Hybridkord zur Verwendung als Festigkeitsträger in einer Festigkeitsträgerlage, insbesondere einer Gürtelbandage, eines Fahrzeugluftreifens. Dieser Hybridkord besteht aus einem hochmoduligen Garn und einem niedermoduligen Garn, wobei die Garne miteinander endverdreht sind und wobei der Hybridkord eine asymmetrische Konstruktion aufweist. Das hochmodulige Garn weist eine Feinheit von größer 2500 dtex auf, wobei die Feinheit des hochmoduligen Garns um mindestens das Zweifache größer ist als die Feinheit des niedermoduligen Garns. Der Hybridkord soll unter Aufrechterhaltung guter Hochgeschwindigkeitseigenschaften des Fahrzeugluftreifens eine verbesserte Ermüdungsbeständigkeit aufweisen.

Die DE 10 2008 037 615 A1 offenbart beispielsweise Hybridkorde zur Verwendung als Festigkeitsträger in einer Gürtelbandage mit spezifischen Erstverdrehungszahlen der jeweiligen Garne.

Die EP 1 878 591 B1 offenbart eine Lage von in einer unvulkanisierten Kautschukmischung eingebetteten Festigkeitsträgern für die Gürtelbandage von Fahrzeugluftreifen, wobei in den Festigkeitsträgern für das Garn mit dem hohen Elastizitätsmodul eine maximale Feinheit definiert wird.

Die EP 2 055 817 A1 offenbart einen Reifen mit wenigstens einem Kord, wobei die Garne des Kordes aus spezifischen Materialien ausgebildet sind.

Die EP 2 065 222 B1 offenbart einen Fahrzeugluftreifen mit Verstärkungskorden, wobei das hochmodulige Garn einen elastischen Modul von nicht weniger als 10.000 MPa aufweist und das niedermodulige Garn Nylon 46 ist.

Die EP 3 006 228 B1 offenbart einen Hybridkord, wobei das hochmodulige Garn ein Filamentgarn ist und das niedermodulige Garn ein Garn aus Stapelfasern ist.

Die EP 3 196 343 B1 offenbart ein Hybridkord mit einer kernabdeckenden Struktur, wobei der Hybridkord durch eine spezifische Verdrillungszahl sowie eine spezifische Zugfestigkeit und einen spezifischen Young'schen Modul des Hochmodulgarns definiert ist.

Die EP 3 365 187 B1 offenbart eine Karkasse für Pneumatikreifen mit einer Vielzahl von zweilagigen Hybridkorden, wobei die Hybridkorde einen spezifischen Nylongehalt, einen spezifischen linearen Gesamtdichtewert und einen vorgegebenen Verdrillungsgrad aufweisen.

Die US 2018/0099529 A1 offenbart ein Verstärkungselement, wobei ein hochmoduliges Garn und ein niedermoduliges Garn in einer spezifischen Weise miteinander verdreht sind.

Die WO 2014/104680 A1 offenbart einen Hybridkord umfassend verdrehtes Nylon und verdrehtes Aramidgarn, die wiederum miteinander endverdreht sind.

Die WO 2018/075305 A1 offenbart einen Hybridkord, in dem ein Nylongarn und ein Aramidgarn die gleiche Verdrehung und eine annähernd gleiche Länge aufweisen.

Die Aufgabe der vorliegenden Erfindung war es, die aus dem Stand der Technik bekannten Nachteile zu überwinden oder zumindest zu vermindern.

Insbesondere war es die Aufgabe der vorliegenden Erfindung, einen Verstärkungskord zur Verwendung als Festigkeitsträger in einer Gürtelbandage eines Fahrzeugluftreifens anzugeben, welcher die für Triplexkorde bekannten Nachteile vermindert oder sogar ganz ausräumt.

Insbesondere sollte der anzugebende Verstärkungskord beim möglichst ähnlichem Kraft-Dehnungs-Verhalten leichter und kostengünstiger herzustellen sein als entsprechende Triplexkorde. Zudem sollte der anzugebende Verstärkungskord bei möglichst ähnlichem Kraft-Dehnungs-Verhalten idealerweise einen geringeren Durchmesser aufweisen und einen niedrigere Wert für die Gesamtfeinheit besitzen.

Im Vergleich zu dem aus dem Stand der Technik bekannten Duplexkorden war es hingegen die Aufgabe, einen Verstärkungskord anzugeben, welcher über ausgezeichnete Kraft-Dehnungs-Eigenschaften verfügt, die denen von aus dem Stand der Technik bekannten Triplexkorden entsprechen.

Es war insoweit die Aufgabe, einen Verstärkungskord anzugeben, welcher für den Einsatz in solchen Fahrzeugluftreifen besonders geeignet ist, die für Hochgeschwindigkeitsanwendungen optimiert sind.

Hierbei war es eine ergänzende Vorgabe, dass der anzugebende Verstärkungskord idealerweise unter Verwendung von üblichen Herstellverfahren herstellbar sein sollte und eine möglichst hohe chemische Kompatibilität mit den üblichen, in Fahrzeugluftreifen eingesetzten schwefelhärtbaren Zusammensetzungen aufweisen sollte.

Es war eine ergänzende Aufgabe der vorliegenden Erfindung, dass der anzugebende Verstärkungskord zu verbesserten Rolleigenschaften führen sollte, insbesondere zu einem günstigeren Rollwiderstand.

Die Erfinder der vorliegenden Erfindung haben nunmehr erkannt, dass sich die vorstehenden Aufgaben überraschenderweise lösen lassen, wenn als Verstärkungskord ein Duplexkord bereitgestellt wird, wie er in den beigefügten Ansprüchen definiert ist. Insbesondere haben die Erfinder der vorliegenden Erfindung erkannt, dass ein günstiges Kraft-Dehnungs-Verhalten für den Duplexkord überraschenderweise dann erreicht werden kann, wenn gegenüber den aus dem Stand der Technik üblicherweise eingesetzten hochmoduligeren Garnen wie Aramid ein anderes Garn eingesetzt wird, welches gegenüber dem Stand der Technik über einen deutlich erhöhten Modul verfügt.

Insoweit haben die Erfinder der vorliegenden Erfindung jedoch auch erkannt, dass, um mit aus dem Stand der Technik bekannten Triplexkorden vergleichbare Kraft-Dehnungs-Eigenschaften zu erhalten, zudem ein bestimmtes Verhältnis zwischen den Feinheiten der zwei im Duplexkord eingesetzten Garne eingestellt werden muss, sodass das sehr hochmodulige erste Garn eine Feinheit aufweisen sollte, die nicht zu deutlich über der des zweiten Garns liegt.

Die vorstehend genannten Aufgaben werden entsprechend durch Duplexkorde, Verbundmaterialien, vulkanisierte Verbundmaterialien, Fahrzeugreifen und Verwendungen gelöst, wie sie in den Ansprüchen definiert sind. Bevorzugte erfindungsgemäße Ausgestaltungen ergeben sich aus den Unteransprüchen und den nachfolgenden Ausführungen. Solche Merkmale erfindungsgemäßer Duplexkorde, Verbundmaterialien, vulkanisierter Verbundmaterialien, Fahrzeugreifen und Verwendungen, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter erfindungsgemäßer Verbundmaterialien, vulkanisierter Verbundmaterialien, Fahrzeugreifen und Verwendungen ergeben sich aus den Merkmalen bevorzugter Duplexkorde.

Die Erfindung betrifft einen Duplexkord zur Verwendung als Festigkeitsträger in einer Gürtelbandage eines Fahrzeugluftreifens, bestehend aus genau zwei miteinander endverdrehten Garnen,
wobei das erste Garn einen Wert für Z von 600 mN/tex oder mehr aufweist, und
wobei das zweite Garn einen Wert für Z von 75 mN/tex oder weniger und einen Wert für Y von 150 mN/tex oder weniger aufweist,
wobei Z die auf die Feinheit des Garns normierte Kraft ist, bei der im Kraft-Dehnungs-Diagramm eine Dehnung von 1 % erhalten wird,
wobei Y die auf die Feinheit des Garns normierte Kraft ist, bei der im Kraft-Dehnungs-Diagramm eine Dehnung von 4 % erhalten wird,
wobei der Quotient X aus der Feinheit des ersten Garns geteilt durch die Feinheit des zweiten Garns im Bereich von 1,0 bis 1,3 liegt,
und wobei das Kraft-Dehnungs-Diagramm mit einer Zugprüfmaschine der Firma Zwick gemäß der Norm ASTM D885/D885M von 2014 aufgenommen ist.

Der erfindungsgemäße Duplexkord ist für die Verwendung als Festigkeitsträger in einer Gürtelbandage eines Fahrzeugluftreifens geeignet und für diese Verwendung besonders bevorzugt.

Der Duplexkord besteht genau aus zwei miteinander endverdrehten Garnen. Die bedeutet, dass kein weiteres Garn in dem Duplexkord enthalten ist.

Erfindungsgemäß weist das erste Garn einen spezifischen Wert für Z auf, wobei Z die auf die Feinheit des Garns normierte Kraft ist, bei der im Kraft-Dehnungs-Diagramm eine Dehnung von 1 % erhalten wird. Der Wert Z korreliert entsprechend mit dem Modul des Garns, wobei die gewählte Definition über den Sehnenmodul (engl.: "chord modulus") eine für den Fachmann gebräuchliche Darstellung dieser Eigenschaft ist, die eine besonders sinnvolle Definition der Materialien ermöglicht. Bei dem ersten Garn handelt es sich somit um ein besonders hochmoduliges Garn, welches insbesondere einen höheren Sehnenmodul aufweist als die in Verstärkungskorden aus dem Stand der Technik eingesetzten Aram idgarne.

Das zweite Garn ist ein niedermoduliges Garn. In Übereinstimmung mit dem fachmännischen Verständnis wird zur ausreichenden Definition des zweiten Garns nicht nur der Wert Z für den Sehnenmodul bei einer Dehnung von 1 %, sondern auch der Wert Y als Sehnenmodul bei einer Dehnung von 4 % vorgegeben.

Die Bestimmung der Werte Y und Z erfolgt in Übereinstimmung mit dem fachmännischen Verständnis aus dem Kraft-Dehnungs-Diagramm und kann mittels der bekannten Feinheit der Garne errechnet werden. Im Rahmen der vorliegenden Erfindung wird das zur Bestimmung von Y und Z verwendete Kraft-Dehnungs-Diagramm mit einer Zugprüfmaschine der Firma Zwick gemäß der Norm ASTM D885/D885M von 2014 aufgenommen.

Im erfindungsgemäßen Duplexkord werden zur Erreichung eines Kraft-Dehnungs-Verhaltens, welches dem eines Triplexkordes entspricht, zudem die Feinheiten des ersten und des zweiten Garns spezifisch aufeinander abgestimmt. Dies erfolgt über den Quotienten X, für dessen Berechnung die Feinheit des ersten Garns durch die Feinheit des zweiten Garns geteilt wird. Der Quotient X muss nach Einschätzung der Erfinder in dem vorgegebenen Bereich liegen, um zuverlässig ein erfindungsgemäßes Duplexkord zu erhalten, welches die gestellten Aufgaben löst.

Der Ausdruck Feinheit ist für den Fachmann im Bereich der Textilien klar und wird zuweilen auch als lineare Dichte bezeichnet. Diese Größe korreliert mit der Dicke oder Stärke eines Garns und stellt eine längenbezogene Masse dar, die üblicherweise mit der Einheit tex oder dtex bezeichnet wird.

Mit erfindungsgemäßen Duplexkorden werden die vorstehend definierten Aufgaben gelöst und Verstärkungskorde als Festigkeitsträger erhalten, durch deren Einsatz in der Gürtelbandage eines Fahrzeugluftreifens Hochleistungsreifen erhalten werden können, die über ausgezeichnete Hochgeschwindigkeitseigenschaften verfügen.

Die Erfinder der vorliegenden Erfindung sind zu der Einschätzung gekommen, dass es besonders vorteilhaft ist, wenn das Verhältnis der Feinheiten auf ganz spezifische Werte eingestellt wird, wobei das hochmodulige erste Garn idealerweise Werte aufweisen sollte, die in einem bestimmten Bereich knapp oberhalb der Feinheit des zweiten Garns liegen. Insbesondere bei erfindungsgemäßen Duplexkorden, bei denen der Quotient X bei etwa 1,15 liegt, wurde ein Kraft-Dehnungs-Verhalten beobachtet, welches dem eines als Referenzsystem fungierenden Triplexkordes besonders ähnlich war. Bevorzugt ist entsprechend ein erfindungsgemäßer Duplexkord, wobei der Quotient X aus der Feinheit des ersten Garns geteilt durch die Feinheit des zweiten Garns im Bereich von 1,05 bis 1,25, bevorzugt im Bereich von 1,1 bis 1,2, besonders bevorzugt im Bereich von 1,13 bis 1,17, liegt.

Die Erfinder der vorliegenden Erfindung haben erkannt, dass es besonders vorteilhaft ist, ein besonders hochmoduliges erstes Garn zu wählen, da hierdurch überraschend besonders leistungsfähige Duplexkorde erhalten werden können, deren resultierendes Kraft-Dehnungs-Verhalten vorteilhafterweise mit dem solcher Triplexkorde vergleichbar ist, bei denen mehrere Garne aus herkömmlichem hochmoduligen Material, beispielsweise Aramid, eingesetzt werden. Bevorzugt ist nämlich ein erfindungsgemäßer Duplexkord, wobei das erste Garn einen Wert für Z von 650 mN/tex oder mehr, bevorzugt 700 mN/tex oder mehr, aufweist.

Darüber hinaus schlagen die Erfinder vor, das zweite Garn mit einem möglichst kleinen Modul auszuwählen, sodass bewusst eine große Differenz zwischen den Modulen der beiden eingesetzten Garne besteht. Mit einem entsprechenden Aufbau werden regelmäßig erfindungsgemäße Duplexkorde erhalten, die sich besonders leicht und effizient verarbeiten lassen. Bevorzugt ist folglich ein erfindungsgemäßer Duplexkord, wobei das zweite Garn einen Wert für Z von 65 mN/tex oder weniger, bevorzugt von 55 mN/tex oder weniger, aufweist, und/oder wobei das zweite Garn einen Wert für Y von 140 mN/tex oder weniger, bevorzugt von 135 mN/tex oder weniger, aufweist.

Den Erfindern der vorliegenden Erfindung ist es im Zuge der Entwicklungsarbeit gelungen, besonders geeignete Materialien zu identifizieren, die in erfindungsgemäßen Duplexkorden als erstes oder zweites Garn eingesetzt werden können. Für das hochmodulige Garn haben sich dabei insbesondere spezifisches, hinsichtlich seines Moduls optimiertes, besonders hochmoduliges Aramid (welches auch als HM-Aramid bezeichnet wird) sowie das als Zylon bekannte Material als geeignet erwiesen. Diese Materialien unterscheiden sich in ihrem Modul deutlich von dem im Stand der Technik für Duplexkorde üblicherweise eingesetzten regulären Aramid. Hinsichtlich des niedermoduligen zweiten Garns haben sich insbesondere Polyamide als geeignet erwiesen, wobei insbesondere das als Nylon bekannte Material bevorzugt ist, insbesondere Nylon PA6.6.

Bevorzugt ist somit ein erfindungsgemäßer Duplexkord, wobei das erste Garn ein Material umfasst, welches ausgewählt ist aus der Gruppe bestehend aus aromatischen Polyamiden, insbesondere Poly(p-phenylenterephthalamid), und Polyoxazolen, insbesondere Poly(p-phenylen-2,6-benzobisoxazol), wobei das erste Garn bevorzugt aus diesem Material besteht. Besonders bevorzugt ist ein somit ein erfindungsgemäßer Duplexkord, wobei das erste Garn aus Poly(p-phenylenterephthalamid) oder Poly(p-phenylen-2,6-benzobisoxazol) besteht. Die spezifische Ausgestaltung dieser Materialien als besonders hochmodulige Ausführungsform folgt dabei aus dem vorstehend definierten Wert für Z.

Bevorzugt ist entsprechend auch ein erfindungsgemäßer Duplexkord, wobei das zweite Garn ein Material umfasst, welches ausgewählt ist aus der Gruppe bestehend aus Polyamiden, insbesondere Polyhexamethylenadipinsäureamid, wobei das zweite Garn bevorzugt aus diesem Material besteht.

Nach Einschätzung der Erfinder sollten das erste und das zweite Garn zum Erhalt von besonders leistungsfähigen erfindungsgemäßen Duplexkorden Feinheiten aufweisen, deren Werte jeweils über 1000 dtex liegen, wobei mit Blick auf die Dicke des resultierenden Duplexkordes von den Erfindern bestimmte Obergrenzen vorgeschlagen werden, oberhalb derer es bei der späteren Anwendung im Fahrzeugreifen leichter zu einer stärkeren Hitzeentwicklung kommen kann. Bevorzugt ist insoweit ein erfindungsgemäßer Duplexkord, wobei das erste Garn eine Feinheit im Bereich von 1000 bis 3000 dtex, bevorzugt im Bereich von 1500 bis 2000 dtex, aufweist. Bevorzugt ist ebenfalls ein erfindungsgemäßer Duplexkord, wobei das zweite Garn eine Feinheit im Bereich von 1000 bis 2000 dtex, bevorzugt im Bereich von 1300 bis 1700 dtex, aufweist.

Ausgehend von den vorstehenden angegebenen Angaben sollte die gesamte Feinheit des Duplexkordes nach Einschätzung der Erfinder idealerweise ebenfalls in einem bestimmten, mittleren Bereich liegen. Bevorzugt ist daher ein erfindungsgemäßer Duplexkord, wobei der Duplexkord eine Feinheit im Bereich von 2500 bis 4000 dtex, bevorzugt im Bereich von 2800 bis 3500 dtex, aufweist.

Im Zuge der Entwicklung konnten die Erfinder der vorliegenden Erfindung ein Kraft-Dehnungs-Profil identifizieren, welches mit erfindungsgemäßen Duplexkorden eingestellt werden kann und welches in seinem Verhalten dem von Triplexkorden für Hochgeschwindigkeitsanwendungen besonders ähnlich ist. Mit derart bevorzugten Duplexkorden können entsprechend Fahrzeugreifen hergestellt werden, die für diese Hochgeschwindigkeitsanwendungen besonders vorteilhaft sind und insbesondere die notwendige Steifigkeit aufwiesen.

Bevorzugt ist ein erfindungsgemäßer Duplexkord, wobei der Duplexkord folgende Kraft-Dehnungs-Eigenschaften aufweist:
13 bis 17 N bei 1 % Dehnung,
29 bis 33 N bei 2 % Dehnung,
57 bis 63 N bei 3 % Dehnung,
102 bis 112 N bei 4 % Dehnung,
160 bis 180 N bei 5 % Dehnung,
240 bis 280 N bei 6 % Dehnung.

Auch wenn die erfindungsgemäßen Duplexkorde hinsichtlich der Verdrehung zwischen den Garnen nach Einschätzung der Erfinder vergleichsweise flexibel sind, schlagen die Erfinder ausgehend von den ihnen zur Verfügung stehenden Erkenntnissen spezifische Twistfaktoren vor, die zu besonders geeigneten erfindungsgemäßen Duplexkorden führen. Bevorzugt ist nämlich ein erfindungsgemäßer Duplexkord, wobei der Duplexkord einen Twistfaktor im Bereich von 150 bis 200, bevorzugt im Bereich von 170 bis 230, besonders bevorzugt im Bereich von 185 bis 215, aufweist.

Im Lichte der vorstehenden Ausführungen ist ersichtlich, dass die Erfindung auch ein Verbundmaterial betrifft, welches einen oder mehrere der erfindungsgemäßen Duplexkorde umfasst. Die Erfindung betrifft somit zudem ein Verbundmaterial, insbesondere zum Einsatz bei der Fertigung einer Gürtelbandage eines Fahrzeugluftreifens, umfassend einen oder mehrere erfindungsgemäße Duplexkorde, die zumindest teilweise von einer vernetzbaren Gummierungsmischung bedeckt sind.

In Übereinstimmung mit dem fachmännischen Verständnis können hierbei als vernetzbare Gummierungsmischungen die aus dem Stand der Technik bekannten Gummierungsmischungen eingesetzt werden, die regelmäßig bei der Herstellung von Fahrzeugluftreifen zum Einsatz kommen. Es kann insoweit auch als Vorteil der erfindungsgemäßen Duplexkorde angesehen werden, dass diese eine Materialauswahl erlauben, die eine hohe chemische Verträglichkeit mit den aus dem Stand der Technik bekannten vernetzbaren Gummierungsmischungen aufweist.

Die vorteilhaften Eigenschaften des erfindungsgemäßen Verbundmaterials sind insbesondere darin zu sehen, dass dieses bei der Herstellung von Fahrzeugluftreifen eingesetzt werden kann, welche über einen günstigen Rollwiderstand und die für Hochgeschwindigkeitsanwendungen notwendige Steifigkeit bei einem optimierten Hysterese-Verhalten verfügen. Hierbei weist das erfindungsgemäße Verbundmaterial im Vergleich zu solchen Materialien, die Triplexkorde einsetzen, sehr ähnliche Eigenschaften auf, ist dabei durch das einfachere Fertigungsverfahren jedoch zumeist deutlich günstiger herzustellen.

Es hat sich als besonders vorteilhaft erwiesen, in entsprechenden erfindungsgemäßen Verbundmaterialien mehrere erfindungsgemäße Duplexkorde einzusetzen und diese vorzugsweise im Wesentlichen parallel zueinander anzuordnen. Die dem Fachmann zur Beschreibung entsprechender Anordnung geläufigen Größe ist dabei die **EPDM,** die die Zahl der Verstärkungskorde pro Dezimeter entlang einer senkrecht zur Längsachse der Duplexkorde stehenden Richtung angibt. Bevorzugt ist entsprechend ein erfindungsgemäßes Verbundmaterial, wobei das Verbundmaterial zwei oder mehrere erfindungsgemäße Duplexkorde umfasst, wobei die Duplexkorde bevorzugt im Wesentlichen parallel zueinander angeordnet sind.

Bevorzugt ist ein erfindungsgemäßes Verbundmaterial, wobei der oder die Duplexkorde vollständig von der vernetzbaren Gummierungsmischung bedeckt sind, wobei der oder die Duplexkorde bevorzugt vollständig von der vernetzbaren Gummierungsmischung umgeben sind.

Durch Vulkanisieren des erfindungsgemäßen Verbundmaterials kann ein vulkanisiertes Verbundmaterial erhalten werden, welches in erfindungsgemäßen Fahrzeugluftreifen eingesetzt werden kann. Das erfindungsgemäße Verbundmaterial bzw. das vulkanisierte Verbundmaterial können verwendet werden, um Gürtelbandagen bzw. Fahrzeugreifen herzustellen, die über ausgezeichnete Hochgeschwindigkeitseigenschaften und einen vorteilhaften Rollwiderstand verfügen, wobei die erfindungsgemäßen Duplexkorde für die notwendige Steifigkeit sorgen und wegen des gegenüber vergleichbaren Triplexkorden geringeren Durchmessers zu einer Verminderung des Wärmeaufbaus in den entsprechenden Fahrzeugreifen beitragen.

Die Erfindung betrifft somit ebenfalls ein vulkanisiertes Verbundmaterial, herstellbar durch Vulkanisation eines erfindungsgemäßen Verbundmaterials.

Offenbart wird zudem eine Gürtelbandage für den Einsatz bei der Fertigung eines Fahrzeugluftreifens, umfassend einen oder mehrere erfindungsgemäße Duplexkorde, ein erfindungsgemäßes Verbundmaterial oder ein erfindungsgemäßes vulkanisiertes Verbundmaterial.

Die Erfindung betrifft auch einen Fahrzeugreifen, insbesondere Fahrzeugluftreifen, umfassend ein erfindungsgemäßes Verbundmaterial oder ein erfindungsgemäßes vulkanisiertes Verbundmaterial.

Die Erfindung betrifft abschließend auch die Verwendung eines erfindungsgemäßen Duplexkords oder mehrerer erfindungsgemäßer Duplexkorde in der Gürtelbandage eines Fahrzeugluftreifens zur Verbesserung der Hochgeschwindigkeitseigenschaften und der Rollwiderstandseigenschaften.

Nachfolgend werden bevorzugte Ausführungsformen der Erfindung unter Bezugnahme auf die beiliegenden experimentellen Daten näher erläutert und beschrieben.

Als Referenzsystem V1 wurde ein Triplexkord bereitgestellt, welcher zwei Garne aus regulärem Aramid und ein Garn aus Nylon bei einem Twistlevel von 320 T/m umfasst. Die Feinheit der eingesetzten Aramidgarne betrug 1680 dtex und die Feinheit des Nylons 470 dtex.

Im erfindungsgemäßen Duplexkord E1 wurde ein Hochmodularamid (HM-Aramid) mit einer Feinheit von 1610 dtex eingesetzt und mit einem Nylongarn mit 1400 dtex endverdreht.

Der Wert für Z des Hochmodularamid betrug 678 mN/tex. Der Wert für Z des Nylon betrug 50 mN/tex und der Wert für Y des Nylon betrug 135 mN/tex. Die entsprechenden Werte wurden aus den Kraft-Dehnungs-Diagrammen der Garne ermittelt, die mit einer Zugprüfmaschine der Firma Zwick gemäß der Norm ASTM D885/D885M von 2014 bestimmt wurden.

Die entsprechenden Verstärkungskorde wurden in Verbundmaterialien zu Gürtelbandagen verarbeitet und zudem in 245/40 ZR18 ("extreme contact" DWS06) Reifen eingesetzt. Dabei zeigten die Reifen mit erfindungsgemäßen Duplexkorden einen niedrigeren Rollwiderstand und vergleichbare Hochgeschwindigkeitseigenschaften.

Aus der nachfolgenden Tabelle 1 ist ersichtlich, dass die bei einer spezifischen Dehnung notwendige Kraft (LASE; "load at specified elongation") in erfindungsgemäßen Duplexkorden vorteilhafterweise ausgezeichnet zu den Werten passt, die für die Triplexkorde aus dem Stand der Technik erhalten werden. Aus Tabelle 1 ist dabei auch ersichtlich, dass der Gesamtdurchmesser des erfindungsgemäßen Duplexkords deutlich unter dem Gesamtdurchmesser des Referenzsystems liegt und dass sich entsprechend bei der gleichen Menge an Gummierung über dem Kord eine dünnere Lagenstärke einstellen lässt. Der erfindungsgemäße Duplexkord ist dabei wegen des verwendeten einstufigen Fertigungsprozesses ("twist-process") einfacher und kostengünstiger herstellbar.

Im Lichte der nachfolgend in Tabelle 1 dargestellten Daten ist es für den Fachmann zudem ersichtlich, dass sich mit erfindungsgemäßen Duplexkorden bei gleichem Gesamtdurchmesser auch Verstärkungskorde erhalten ließen, die über einen höheren Modul verfügen, als der entsprechende Triplexkord.

**Tabelle 1**

| | Einheit | V1 | E2 |
|---|---|---|---|
| Garne | - | 1680x2 (Aramid) +470x1 (Nylon) | 1610x1 (HM-Aramid) +1400x1 (Nylon) |
| EPDM | - | 80 | 90 |
| LASE 2% | N | 36 | 31 |
| | N/cm | 288 | 279 |
| LASE 4% | N | 122 | 107 |
| | N/cm | 976 | 963 |
| Durchmesser | mm | 0,90 | 0,75 |
| Spacing | mm | 0,35 | 0,36 |
| Lagenstärke | mm | 1,30 | 1,15 |
| Gummi über Kord | mm | 0,20 | 0,20 |
| Twist | T/m | 320 | 361 |
| Twistfaktor | - | 198 | 198 |
| Twist-Prozess | - | 2 Stufen | 1 Stufen |
| Feinheitsquotient X | - | 7,14 | 1,15 |

## Patentansprüche

1. Duplexkord zur Verwendung als Festigkeitsträger in einer Gürtelbandage eines Fahrzeugluftreifens, bestehend aus genau zwei miteinander endverdrehten Garnen,
wobei das erste Garn einen Wert für Z von 600 mN/tex oder mehr aufweist, und
wobei das zweite Garn einen Wert für Z von 75 mN/tex oder weniger und einen Wert für Y von 150 mN/tex oder weniger aufweist,
wobei Z die auf die Feinheit des Garns normierte Kraft ist, bei der im Kraft-Dehnungs-Diagramm eine Dehnung von 1 % erhalten wird,
wobei Y die auf die Feinheit des Garns normierte Kraft ist, bei der im Kraft-Dehnungs-Diagramm eine Dehnung von 4 % erhalten wird,
wobei der Quotient X aus der Feinheit des ersten Garns geteilt durch die Feinheit des zweiten Garns im Bereich von 1,0 bis 1,3 liegt,
und wobei das Kraft-Dehnungs-Diagramm mit einer Zugprüfmaschine der Firma Zwick gemäß der Norm ASTM D885/D885M von 2014 aufgenommen ist.

2. Duplexkord nach Anspruch 1, wobei der Quotient X aus der Feinheit des ersten Garns geteilt durch die Feinheit des zweiten Garns im Bereich von 1,05 bis 1,25, bevorzugt im Bereich von 1,1 bis 1,2, besonders bevorzugt im Bereich von 1,13 bis 1,17, liegt.

3. Duplexkord nach einem der Ansprüche 1 oder 2, wobei das erste Garn einen Wert für Z von 650 mN/tex oder mehr, bevorzugt 700 mN/tex oder mehr, aufweist.

4. Duplexkord nach einem der Ansprüche 1 bis 3, wobei das erste Garn ein Material umfasst, welches ausgewählt ist aus der Gruppe bestehend aus aromatischen Polyamiden, insbesondere Poly(p-phenylenterephthalamid), und Polyoxazolen, insbesondere Poly(p-phenylen-2,6-benzobisoxazol), wobei das erste Garn bevorzugt aus diesem Material besteht.

5. Duplexkord nach einem der Ansprüche 1 bis 4, wobei das erste Garn eine Feinheit im Bereich von 1000 bis 3000 dtex, bevorzugt im Bereich von 1500 bis 2000 dtex, aufweist.

6. Duplexkord nach einem der Ansprüche 1 bis 5, wobei das zweite Garn eine Feinheit im Bereich von 1000 bis 2000 dtex, bevorzugt im Bereich von 1300 bis 1700 dtex, aufweist.

7. Verbundmaterial, insbesondere zum Einsatz bei der Fertigung eines Fahrzeugluftreifens, umfassend einen oder mehrere Duplexkorde nach einem der Ansprüche 1 bis 6, die zumindest teilweise von einer vernetzbaren Gummierungsmischung bedeckt sind.

8. Vulkanisiertes Verbundmaterial, herstellbar durch Vulkanisation eines Verbundmaterials nach Anspruch 7.

9. Fahrzeugreifen, insbesondere Fahrzeugluftreifen, umfassend ein Verbundmaterial nach Anspruch 7 oder ein vulkanisiertes Verbundmaterial nach Anspruch 8.

10. Verwendung eines Duplexkords oder mehrerer Duplexkorde nach einem der Ansprüche 1 bis 6 in der Gürtelbandage eines Fahrzeugluftreifens zur Verbesserung der Hochgeschwindigkeitseigenschaften und der Rollwiderstandseigenschaften.

## Claims

1. Duplex cord for use as strength member in a belt bandage of a pneumatic vehicle tire, consisting of exactly two yarns that are twisted together at the ends,
wherein the first yarn has a Z value of 600 mN/tex or more, and
wherein the second yarn has a Z value of 75 mN/tex or less and a Y value of 150 mN/tex or less,
where Z is the force normalized to the linear yarn density at which an elongation of 1% is obtained in the force-elongation diagram,
where Y is the force normalized to the linear yarn density at which an elongation of 4% is obtained in the force-elongation diagram,
where the quotient X of the linear density of the first yarn divided by the linear density of the second yarn is in the range from 1.0 to 1.3,
and where the force-elongation diagram is recorded with a tensile testing machine from Zwick in accordance with the standard ASTM D885/D885M of 2014.

2. Duplex cord according to Claim 1, wherein the quotient X of the linear density of the first yarn divided by the linear density of the second yarn is in the range from 1.05 to 1.25, preferably in the range from 1.1 to 1.2, particularly preferably in the range from 1.13 to 1.17.

3. Duplex cord according to either of Claims 1 and 2, wherein the first yarn has a Z value of 650 mN/tex or more, preferably 700 mN/tex or more.

4. Duplex cord according to any of Claims 1 to 3, wherein the first yarn comprises a material selected from the group consisting of aromatic polyamides, in particular poly(p-phenyleneterephthalamide), and polyoxazoles, in particular poly(p-phenylene-2,6-benzobisoxazole), the first yarn preferably consisting of this material.

5. Duplex cord according to any of Claims 1 to 4, wherein the first yarn has a linear density in the range from 1000 to 3000 dtex, preferably in the range from 1500 to 2000 dtex.

6. Duplex cord according to any of Claims 1 to 5, wherein the second yarn has a linear density in the range from 1000 to 2000 dtex, preferably in the range from 1300 to 1700 dtex.

7. Composite material, in particular for use in the manufacture of a pneumatic vehicle tire, comprising one or more duplex cords according to any of Claims 1 to 6 which are at least partially covered by a crosslinkable rubberization mixture.

8. Vulcanized composite material, producible by vulcanization of a composite material according to Claim 7.

9. Vehicle tire, in particular pneumatic vehicle tire, comprising a composite material according to Claim 7 or a vulcanized composite material according to Claim 8.

10. Use of a duplex cord or a plurality of duplex cords according to any of Claims 1 to 6 in the belt bandage of a pneumatic vehicle tire for improving the high-speed properties and the rolling resistance properties.

## Revendications

1. Câblé duplex pour utilisation en tant que support de résistance dans un bandage de ceinture d'un pneu à air de véhicule, constitué d'exactement deux fils torsadés ensemble à leurs extrémités,
le premier fil présentant une valeur pour Z de 600 mN/tex ou plus, et
le deuxième fil présentant une valeur pour Z de 75 mN/tex ou moins et une valeur pour Y de 150 mN/tex ou moins,
Z étant la force normalisée à la finesse du fil pour laquelle un allongement de 1 % est obtenu dans le diagramme force-allongement,
Y étant la force normalisée à la finesse du fil pour laquelle un allongement de 4 % est obtenu dans le diagramme force-allongement,
le quotient X de la finesse du premier fil divisée par la finesse du deuxième fil se situant dans la plage de 1,0 à 1,3,
et le diagramme force-allongement étant enregistré avec une machine d'essai de traction de la société Zwick, conformément à la norme ASTM D885/D885M de 2014.

2. Câblé duplex selon la revendication 1, dans lequel le quotient X de la finesse du premier fil divisée par la finesse du deuxième fil se situe dans la plage de 1,05 à 1,25, de préférence dans la plage de 1,1 à 1,2, de manière particulièrement préférée dans la plage de 1,13 à 1,17.

3. Câblé duplex selon l'une quelconque des revendications 1 ou 2, dans lequel le premier fil présente une valeur pour Z de 650 mN/tex ou plus, de préférence de 700 mN/tex ou plus.

4. Câblé duplex selon l'une quelconque des revendications 1 à 3, dans lequel le premier fil comprend un matériau choisi dans le groupe constitué par les polyamides aromatiques, notamment le poly(p-phénylène téréphtalamide), et les polyoxazoles, notamment le poly(p-phénylène-2,6-benzobisoxazole), le premier fil étant de préférence constitué de ce matériau.

5. Câblé duplex selon l'une quelconque des revendications 1 à 4, dans lequel le premier fil a une finesse dans la plage de 1 000 à 3 000 dtex, de préférence dans la plage de 1 500 à 2 000 dtex.

6. Câblé duplex selon l'une quelconque des revendications 1 à 5, dans lequel le deuxième fil a une finesse dans la plage de 1 000 à 2 000 dtex, de préférence dans la plage de 1 300 à 1 700 dtex.

7. Matériau composite, notamment pour utilisation dans la fabrication d'un pneu à air de véhicule, comprenant un ou plusieurs câblés duplex selon l'une quelconque des revendications 1 à 6, recouverts au moins partiellement par un mélange de gommage réticulable.

8. Matériau composite vulcanisé, pouvant être produit par vulcanisation d'un matériau composite selon la revendication 7.

9. Pneu de véhicule, notamment pneu à air de véhicule, comprenant un matériau composite selon la revendication 7 ou un matériau composite vulcanisé selon la revendication 8.

10. Utilisation d'un ou de plusieurs câblés duplex selon l'une quelconque des revendications 1 à 6 dans le bandage de ceinture d'un pneu à air de véhicule pour améliorer les propriétés à vitesse élevée et les propriétés de résistance au roulement.
